# FASCICULE DE BREVET EUROPEEN

(11) **EP 3 802 381 B1**
(45) Date de publication et mention de la délivrance du brevet: **12.07.2023**
(21) Numéro de dépôt: 19730209.4
(22) Date de dépôt: 16.05.2019
(51) Int. Cl.: B65G 47/51, B65G 21/10, B65G 21/14, A21C 9/08, A21C 13/00, B65G 15/22, B65G 29/02, F25D 13/06, F26B 15/12, F26B 21/00, F26B 25/00

(54) **INSTALLATION DE REGULATION DE FLUX DE PRODUITS**
ANLAGE ZUR PRODUKTFLUSSREGULIERUNG
INSTALLATION FOR PRODUCT FLOW REGULATION

(30) Priorité: 24.05.2018 FR 1854378; 24.05.2018 FR 1854381
(43) Date de publication de la demande: 14.04.2021
(73) Titulaire: SG2C, 44320 Saint-Viaud (FR)
(72) Inventeur: GRIAS, Alexis, 44640 VUE (FR)
(74) Mandataire: Ipsilon
(86) Numéro de dépôt international: PCT/FR2019/051118
(87) Numéro de publication internationale: WO 2019/224459

(56) Documents cités:
- EP-A1- 3 210 917
- EP-B1- 0 066 907
- WO-A1-2007/075694
- WO-A1-2016/147105
- WO-A1-2017/080809
- WO-A1-2017/080812
- DE-A1- 3 739 130
- DE-B- 1 166 093
- FR-A1- 2 748 461
- JP-A- H1 189 521
- JP-A- S6 151 418
- US-A- 4 544 352
- US-A- 4 726 766
- US-A- 6 138 660
- US-A1- 2016 159 021
- Yaskawa: "Master/Slave conveyor - Application note", , 15 février 2006 (2006-02-15), pages 1-6, XP055549939, Extrait de l'Internet: URL:http://extras.innovativeidm.com/Resour ceManager.aspx?FileName=AN.YVFD.AN.G7.60.p df&FileType=ApplicationNote [extrait le 2019-01-31]
- Gouet: "MDC Refroidisseur Dynamique Multi-niveaux - baking systems", , 30 septembre 2009 (2009-09-30), pages 1-2, XP055642041, Extrait de l'Internet: URL:https://www.hellopro.fr/documentation/ pdf_prod/1/1/2/36014action=integrer_produi ts_45afef8bcb722fd6e3a47d4667651f97_572321 1.pdf [extrait le 2019-11-13]

## Description

### DOMAINE DE L'INVENTION

L'invention concerne une installation de régulation de flux de produits.

Elle concerne plus particulièrement une installation de régulation de flux de produits comprenant une superposition d'au moins trois transporteurs et un poste d'alimentation en produits précédant ladite superposition de transporteurs, chaque transporteur délimitant un chemin d'entraînement en déplacement de produits, le chemin d'au moins l'un, de préférence de chacun, des transporteurs étant apte à être alimenté en produits à partir du poste d'alimentation en produits, lesdits transporteurs étant disposés sur un châssis, les transporteurs disposés entre le transporteur d'extrémité inférieure, à savoir le transporteur le plus au-dessous de la superposition de transporteurs, et le transporteur d'extrémité supérieure, à savoir le transporteur le plus au-dessus de la superposition de transporteurs, étant appelés transporteurs intermédiaires.

### ART ANTERIEUR

Une telle installation est plus particulièrement utilisée dans le domaine de la fabrication en continu de produits tels que des biscuits, des pizzas ou autres. Cette installation peut être positionnée entre l'unité de fabrication et l'unité de conditionnement et permet, grâce à un stockage des produits sur plusieurs niveaux, d'absorber les à-coups de la production de l'unité de production et de réguler le flux pour approvisionner également de manière appropriée l'unité de conditionnement. Pour offrir une surface de stockage importante permettant une accumulation de produits au niveau de ladite installation sans augmenter de manière importante la longueur des transporteurs, il est nécessaire de multiplier le nombre de transporteurs. Toutefois, jusqu'à présent, de telles installations ne se sont pas développées en raison des problèmes de nettoyage des chemins de transport des transporteurs et d'un manque de productivité de l'installation. En effet, pour permettre un nettoyage de chaque chemin de transport, il est nécessaire de laisser un espace important en hauteur entre deux transporteurs. De ce fait, dans le cas d'une installation comprenant un nombre important de transporteurs superposés, il est alors nécessaire d'utiliser une nacelle pour nettoyer les transporteurs disposés les plus au-dessus de la pile de convoyeurs. De la même manière, la maintenance de tels transporteurs nécessite l'utilisation d'une nacelle. Parallèlement, le fait d'augmenter l'intervalle en hauteur entre deux transporteurs augmente le temps de transfert entre le poste d'alimentation en produits et les transporteurs. Une telle installation de régulation de flux de produits avec des transporteurs mobiles est décrite dans la demande internationale WO 2007/075694. Plus particulièrement, le document WO 2007/075964 divulgue une installation de régulation de flux de produits selon le préambule de la revendication 1.

Une autre installation de régulation de flux de produits est décrite dans la demande internationale WO 2017/080812

### BUTS ET RESUME

Un but de l'invention est de proposer une installation de régulation de flux du type précité dont la conception permet d'augmenter le nombre de transporteurs de l'installation sans nuire à la facilité de nettoyage et de maintenance des transporteurs de l'installation ou à la productivité de l'installation.

A cet effet, l'invention a pour objet une installation de régulation de flux de produits selon la revendication 1.

La réalisation d'au moins deux des transporteurs de la superposition de transporteurs sous forme de transporteurs montés sur le châssis mobiles en monte et baisse de manière indépendante en déplacement dans le sens d'un écartement ou d'un rapprochement de l'un des transporteurs d'extrémité permet de faire varier dans le sens de la hauteur l'écartement entre deux transporteurs. L'installation présente donc deux configurations à savoir, une configuration d'utilisation de l'installation, dans laquelle les transporteurs sont maintenus fixes en écartement dans une position dans laquelle de préférence l'écartement dans le sens de la hauteur entre les transporteurs est le plus faible possible, et une configuration de nettoyage ou de maintenance dans laquelle les transporteurs sont déplaçables en monte et baisse pour permettre de faire varier l'écartement dans le sens de la hauteur entre transporteurs, la configuration d'utilisation ou de service de l'installation correspondant à la configuration dans laquelle des produits sont aptes à être transférés du poste d'alimentation en produits vers les transporteurs. Grâce au fait que l'écartement dans le sens de la hauteur entre deux transporteurs peut être très faible en configuration d'utilisation de l'installation, il en résulte une productivité accrue de l'installation, les temps de transfert des produits entre le poste d'alimentation en produits et la superposition de transporteurs étant réduits.

Selon l'invention, l'installation comprend un système d'entraînement en déplacement en monte et baisse d'au moins l'un des transporteurs mobiles dit transporteur maître et chacun des autres transporteurs mobiles positionné au-dessus du transporteur maître est un transporteur esclave apte à être entraîné en élévation par le transporteur maître. Il en résulte un coût réduit de l'installation.

Selon l'invention, le système d'entraînement en déplacement en monte et baisse d'au moins l'un des transporteurs mobiles, dit transporteur maître, comprend au moins un système d'accouplement à au moins l'un des transporteurs mobiles, le ou chaque système d'accouplement étant activable/désactivable, le transporteur maître étant le transporteur mobile auquel le ou chacun des systèmes d'accouplement est couplé à l'état activé du système d'accouplement. Grâce à cette conception, des transporteurs mobiles peuvent tour à tour devenir un transporteur maître à l'aide d'un même système d'accouplement. Il en résulte un coût réduit de l'installation.

Selon l'invention, le ou au moins l'un des systèmes d'accouplement est formé d'au moins deux doigts disposés de part et d'autre de la superposition de transporteurs, chaque doigt étant porté par un mécanisme d'entraînement en monte et baisse, chaque doigt étant monté mobile entre deux positions pour permettre à l'état positionné des doigts de part et d'autre d'un même transporteur mobile, le passage des doigts d'un position inactive correspondant à l'état inactif du système d'accouplement à une position active de venue en prise avec ledit transporteur mobile correspondant à l'état activé du système d'accouplement.

Selon un mode de réalisation de l'invention, le système d'entraînement en déplacement en monte et baisse du ou d'au moins l'un des transporteurs maîtres comprend au moins un actionneur hydraulique et/ou électrique et/ou pneumatique et/ou mécanique.

Selon un mode de réalisation de l'invention, l'installation comprend au moins une position d'indexation de chaque transporteur esclave et des organes de verrouillage activables/désactivables de chaque transporteur esclave dans la ou dans au moins l'une des positions d'indexation. Il en résulte la possibilité de maintenir l'un quelconque des transporteurs esclaves dans l'une quelconque des positions d'indexation.

Selon un mode de réalisation de l'invention, le ou au moins l'un des transporteurs maîtres est formé par le transporteur intermédiaire disposé immédiatement au-dessus du transporteur d'extrémité inférieure. Ainsi, si nécessaire, le transporteur d'extrémité inférieure peut être un transporteur monté fixe en élévation, ce qui simplifie l'installation.

Selon un mode de réalisation de l'invention, le poste d'alimentation en produits précédant ladite superposition de transporteurs comprend au moins deux transporteurs dits respectivement amont et aval disposés en ligne, chaque transporteur comprenant au moins une bande transporteuse sans fin et un organe moteur d'entraînement en déplacement de ladite bande, cette bande délimitant au niveau de sa surface dite active apte à porter des produits un chemin d'entraînement en déplacement des produits suivant une direction de déplacement des produits avec l'une des extrémités du chemin formant l'entrée d'alimentation en produits du chemin et l'extrémité opposée formant la sortie d'évacuation des produits, lesdits chemins de chaque bande s'étendant dans le prolongement l'un de l'autre, l'extrémité de sortie du chemin du transporteur amont délimitant avec l'extrémité d'entrée du chemin du transporteur aval un front de transition, le front de transition étant monté mobile dans le sens d'un rapprochement ou d'un écartement de l'extrémité d'entrée du chemin du transporteur aval, et au moins une partie du chemin du transporteur aval comprenant l'extrémité de sortie dudit chemin étant montée déplaçable à pivotement autour d'un axe, dit horizontal transversal à la direction de déplacement des produits, cet axe horizontal formant l'axe pivot d'un bâti pivotant sur lequel les transporteurs sont disposés.

Selon un mode de réalisation de l'invention, le bâti pivotant est, pour son montage à pivotement, couplé à un châssis d'une part, par une liaison pivot, d'autre part, par au moins un organe d'entraînement en déplacement autour de l'axe de ladite liaison pivot.

Selon un mode de réalisation de l'invention, l'installation comprend un système de chauffage et/ou de refroidissement d'au moins l'un des transporteurs.

De préférence, le système de chauffage et/ou de refroidissement est un système de chauffage et/ou de refroidissement par air.

Selon un mode de réalisation de l'invention, le système de chauffage et/ou de refroidissement comprend au moins une gaine perméable à l'air positionnée au-dessus du chemin d'entraînement en déplacement de produits du transporteur, un distributeur d'air sous pression et une conduite souple de liaison de la gaine au distributeur d'air. Cette conception permet d'utiliser un même distributeur d'air pour l'ensemble des transporteurs. Il en résulte une simplicité de l'installation.

Selon un mode de réalisation de l'invention, le système de chauffage et/ou de refroidissement comprend en outre un générateur d'air sous pression et des organes de traitement thermique dudit air, le générateur d'air sous pression étant raccordable au distributeur d'air sous pression, ce générateur d'air sous pression étant disposé au-dessus des transporteurs.

Selon un mode de réalisation de l'invention, le châssis comprend au moins deux paires de montants, les montants d'une paire de montants sont disposés en regard l'un de l'autre et séparés l'un de l'autre par la superposition de transporteurs, et le distributeur d'air affecte de préférence la forme d'une colonne disposée parallèlement à l'un des montants du châssis.

### BREVE DESCRIPTION DES FIGURES

L'invention sera bien comprise à la lecture de la description suivante d'exemples de réalisation, en référence aux dessins annexés dans lesquels :
La figure 1 représente une vue simplifiée en perspective d'une installation conforme à l'invention en position de rapprochement maximal des transporteurs ;
La figure 2 représente une vue simplifiée en perspective d'une installation conforme à l'invention en position écartée d'au moins une partie des transporteurs ;
La figure 3 représente une vue simplifiée en coupe longitudinale d'un transporteur d'une installation conforme à l'invention ;
La figure 4 représente une vue schématique simplifiée en coupe transversale d'une installation conforme à l'invention en position écartée des transporteurs ;
La figure 5 représente sous forme de deux vues partielles en perspective prises l'une, côté intérieur du châssis, l'autre, côté extérieur du châssis, un organe de verrouillage en position verrouillée et son organe d'actionnement ;
La figure 6 représente sous forme de deux vues partielles en perspective prises l'une, côté intérieur du châssis, l'autre, côté extérieur du châssis, un organe de verrouillage en position déverrouillée et son organe d'actionnement ;
La figure 7 représente sous forme de vues schématiques simplifiées, un exemple des différentes étapes pour permettre l'accès aux transporteurs d'une installation conforme à l'invention ;

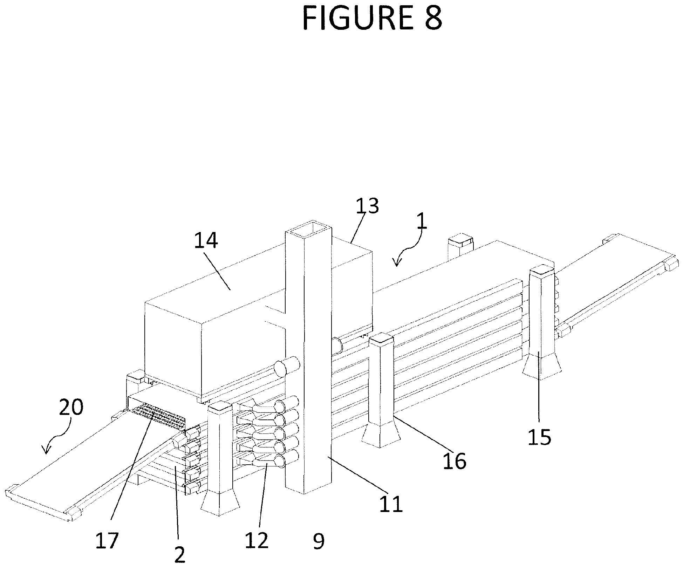

La figure 8 représente une vue simplifiée en perspective d'une installation conforme à l'invention équipée d'un système de chauffage et/ou de refroidissement.

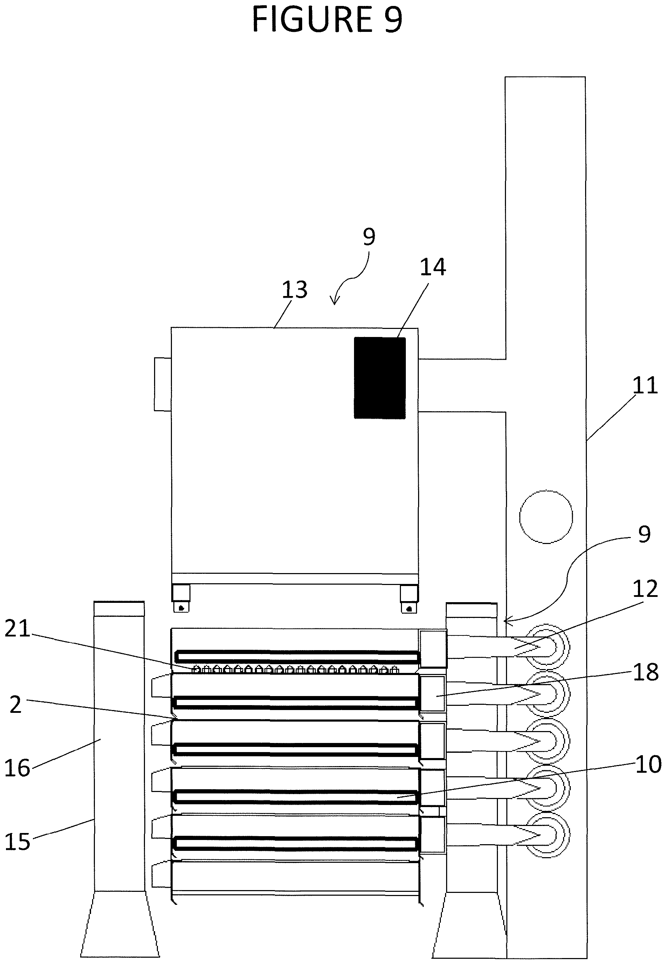

La figure 9 représente une vue schématique simplifiée d'une installation conforme à l'invention équipée d'un système de chauffage et/ou de refroidissement ;
La figure 10 représente sous forme de vues schématiques simplifiées, un exemple des différentes étapes pour permettre l'accès aux transporteurs d'une installation conforme à l'invention suivant un autre mode de réalisation du système d'entrainement ;
La figure 11 représente une vue schématique partielle de face d'un poste d'alimentation en produits équipé d'un bâti pivotant disposé dans une première position ;
La figure 12 représente une vue schématique partielle de face d'un poste d'alimentation en produits équipé d'un bâti pivotant disposé dans une deuxième position ;
La figure 13 représente une vue schématique en perspective d'une installation de régulation de flux de produits équipée d'un bâti pivotant disposé dans une première position ;
La figure 14 représente une vue schématique en perspective d'une installation de régulation de flux de produits équipée d'un bâti pivotant disposé dans une deuxième position ;
La figure 15 représente une vue schématique partielle de face d'une installation de régulation de flux de produits équipée d'un transporteur supplémentaire au niveau du front de transition ;
Les figures 16 à 18 représentent sous forme de vues schématiques partielles de face un poste d'alimentation dont le front de transition est déplacé d'une figure à l'autre.

### DESCRIPTION DETAILLEE

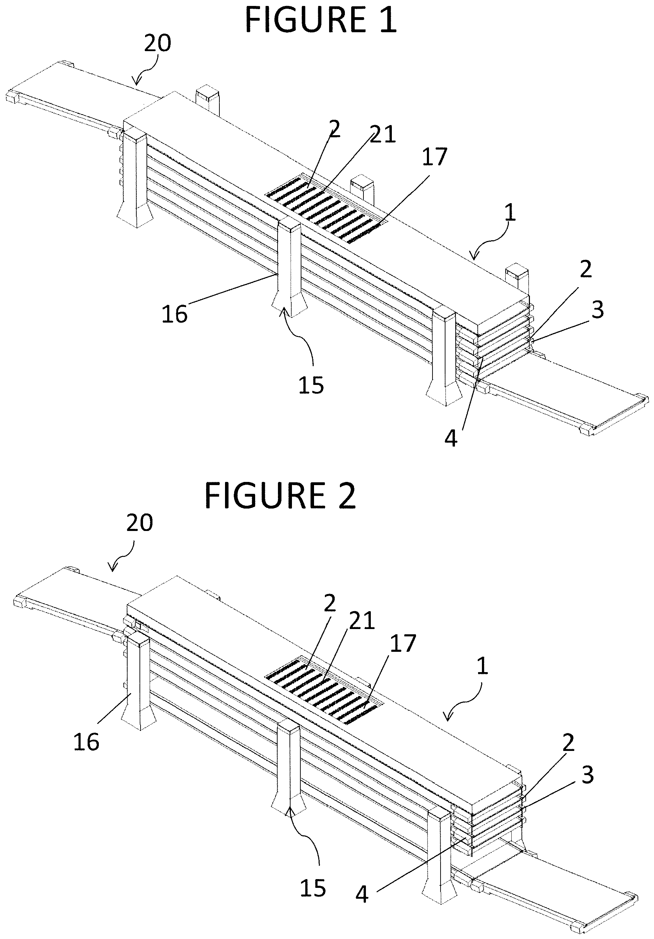

L'installation 1 de régulation de flux de produits 21, objet de l'invention, comprend, telle que représentée à la figure 1, une superposition de transporteurs 2, au nombre de cinq à la figure 1, et un poste 20 d'alimentation en produits précédant la superposition de transporteurs 2, ainsi qu'un poste aval de réception des produits 21 issus des transporteurs 2.

Le poste 20 d'alimentation en produits peut être une installation de cuisson/refroidissement ou une installation d'enrichissement (fourrage, dépose d'un ingrédient) et le poste aval une autre installation d'enrichissement ou une unité de conditionnement des produits.

Les transporteurs 2 de la superposition de transporteurs qui sont disposés en aval du poste 20 d'alimentation en produits permettent donc le transfert des produits entre le poste 20 amont d'alimentation en produits et le poste aval de réception de produits tout en offrant la possibilité d'accumuler les produits pour réguler le flux.

En effet, le poste 20 amont d'alimentation est configuré pour alimenter sélectivement chacun des transporteurs 2 de la superposition de transporteurs 2. Ce poste 20 d'alimentation de produits peut comprendre un transporteur orientable comme représenté, ou par exemple un ascenseur.

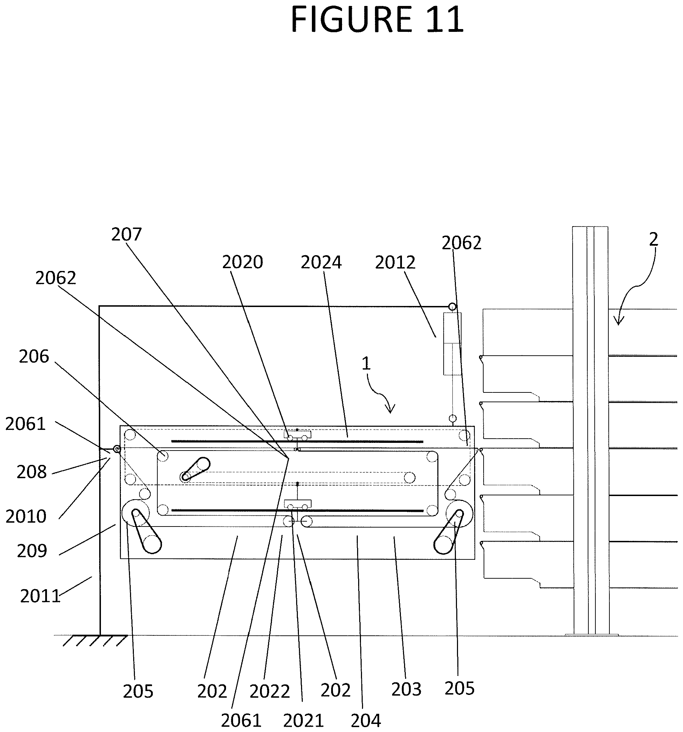

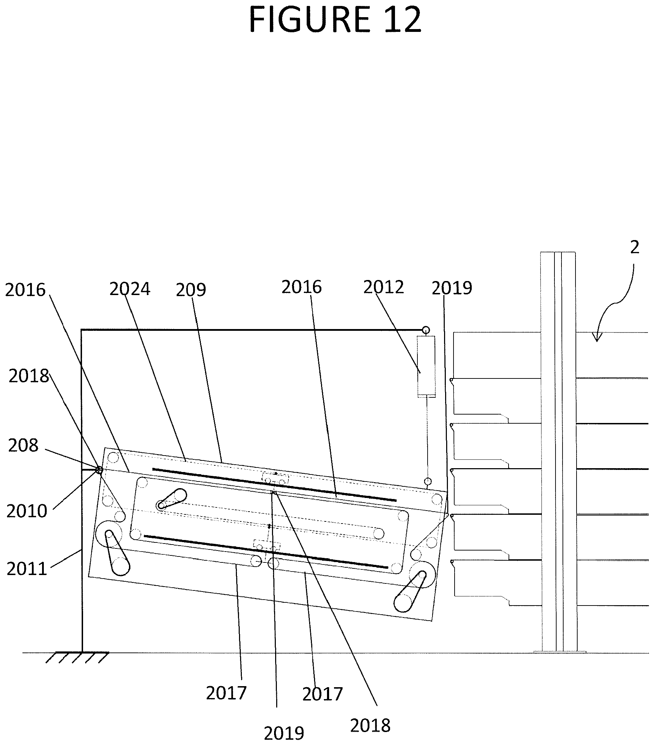

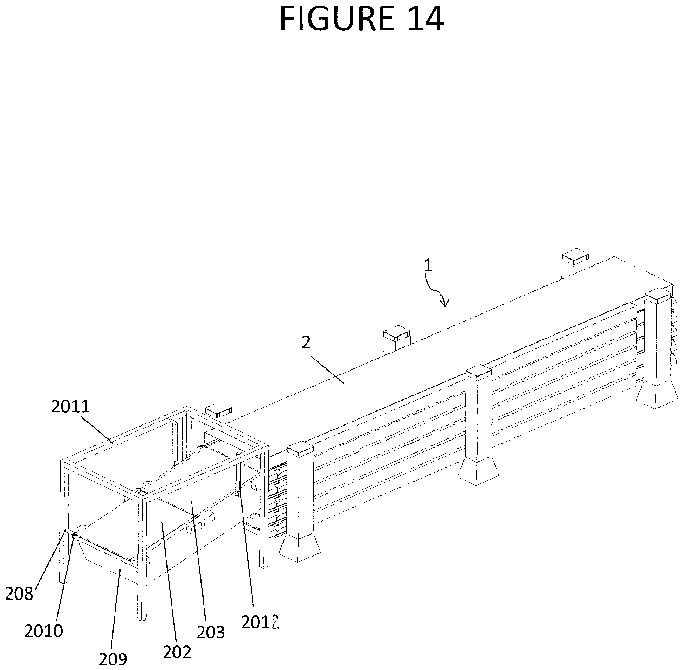

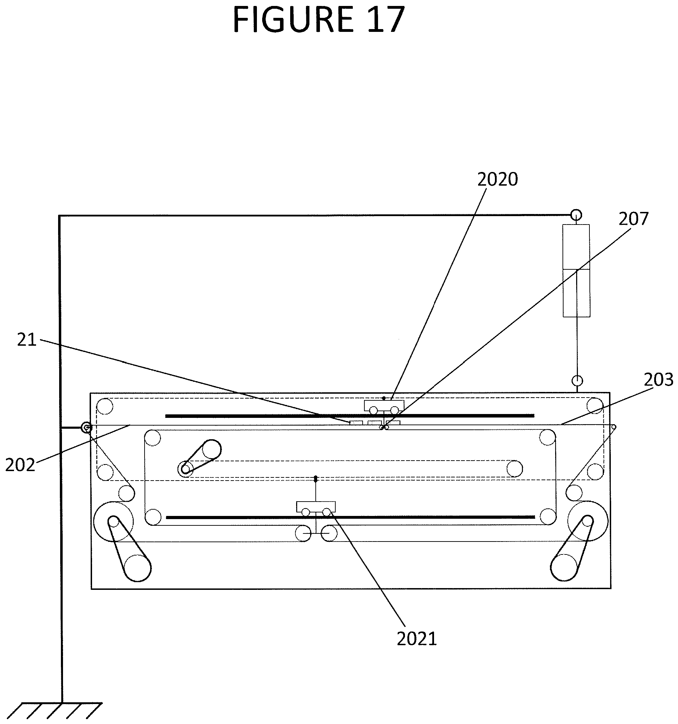

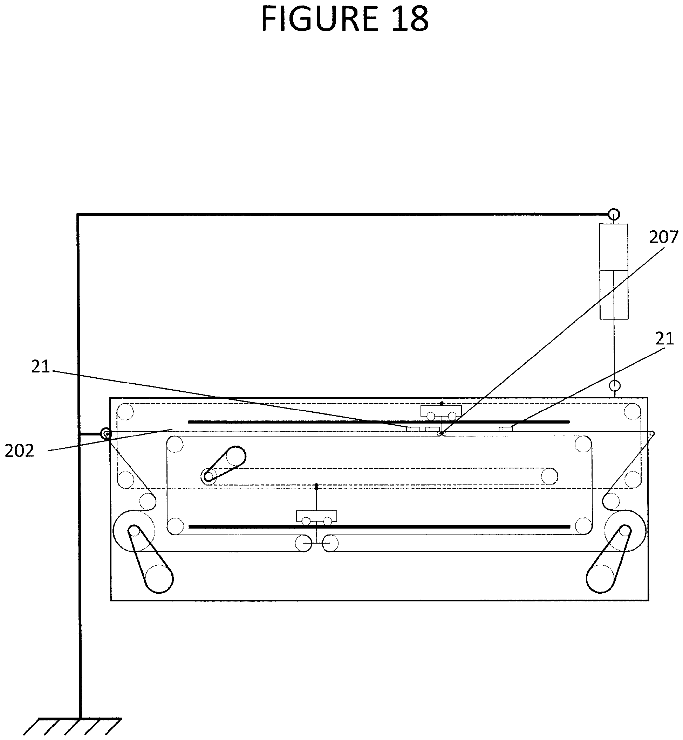

Dans l'exemple représenté aux figures 11 à 18, le poste 20 amont d'alimentation comprend un transporteur amont 202 et un transporteur aval 203 disposés en ligne. Chaque transporteur 202, 203 comprend une bande 204 transporteuse sans fin s'enroulant en boucle autour de rouleaux dont au moins un forme un organe 205 moteur d'entraînement en déplacement de la bande. Cet organe 205 moteur est, par exemple, formé par un rouleau en prise via une courroie avec un arbre moteur.

Les organes 205 moteur sont indépendants d'une bande transporteuse à une autre et sont agencés pour permettre l'entraînement des transporteurs amont et aval suivant un même sens d'entraînement en déplacement mais à des vitesses qui peuvent être identiques ou différentes et fixes ou variables.

Chaque bande 204 transporteuse délimite, au niveau de sa surface dite active apte à porter des produits 21, un chemin 206 d'entraînement en déplacement des produits suivant une direction D de déplacement avec l'une des extrémités du chemin, représentée en 2061 aux figures, formant l'entrée d'alimentation en produits 21 du chemin 206 et l'extrémité opposée, représentée en 2062 aux figures, formant la sortie 2062 d'évacuation des produits du chemin 206.

Ces extrémités seront donc par la suite appelées extrémité d'entrée 2061 et extrémité de sortie 2062 du chemin 206.

La direction D de déplacement des produits 21 correspond donc à un déplacement des produits 21 depuis l'extrémité 2061 d'entrée vers l'extrémité de sortie 2062 de chaque chemin 206. Ces chemins 206 des bandes 204 s'étendent dans le prolongement l'un de l'autre et l'extrémité 2062 de sortie du chemin 206 du transporteur amont 202 délimite avec l'extrémité 2061 d'entrée du chemin 206 du transporteur aval 203 un front 207 de transition.

L'extrémité d'entrée 2061 du transporteur 202 amont est alimentée en produits par un dispositif d'approvisionnement quelconque et l'extrémité de sortie 2062 du transporteur aval alimente en produits l'un quelconque des transporteurs 2 de la superposition de transporteurs 2 qui sera décrite ci-après.

Le front 207 de transition est monté mobile dans le sens d'un rapprochement ou d'un écartement de l'extrémité 2061 d'entrée du chemin 206 du transporteur aval 203 ou de l'extrémité 2062 de sortie du chemin 206 du transporteur amont 202. Quand ce front 207 de transition se rapproche de l'extrémité 2061 d'entrée du chemin du transporteur aval 203, il s'écarte de l'extrémité 2062 de sortie du chemin 206 du transporteur amont 202 et inversement.

Il est ainsi possible, en jouant sur la position du front 207 de transition et éventuellement sur les vitesses de transport des transporteurs amont 202 et aval 203, de grouper les produits par deux, trois ou quatre, ou plus, de dégrouper les produits, de les aligner, de les phaser, etc.

Pour permettre un tel déplacement du front 207 de transition, le poste 20 d'alimentation comprend deux chariots appelés chariot 2020 supérieur et chariot 2021 inférieur.

La bande 204 transporteuse de chacun des transporteurs amont 202 et aval 203 comprend un brin 2016 supérieur et un retour 2017 inférieur coudé. La surface active apte à porter des produits 21 de la bande 204 transporteuse est formée par le brin 2016 supérieur de la bande 204. Le retour 2017 inférieur coudé sert au stockage de l'excès de bande.

Chaque transporteur présente une configuration générale en forme de C. Les C sont disposés en regard l'un de l'autre de sorte que la juxtaposition de deux transporteurs amont et aval forme pratiquement une boucle fermée.

La branche supérieure de chaque C est formée par le brin 2016 supérieur de la bande, tandis que l'âme et la branche inférieure du C sont formées par le retour 2017 inférieur coudé de la bande 204.

La forme de ces bandes est obtenue à l'aide d'une pluralité de rouleaux de tension et/ou de renvoi. Ainsi, le brin 2016 supérieur de chaque transporteur amont ou aval s'enroule autour de deux rouleaux disposés l'un, représenté en 2018, au niveau de l'extrémité d'entrée 2061 du chemin 206 du transporteur, l'autre, représenté en 2019, au niveau de l'extrémité 2062 de sortie du chemin 206.

Le rouleau disposé au niveau de l'extrémité du chemin 206 opposée à celle servant à la délimitation du front 207 de transition mobile est, de préférence, un rouleau fixe suivant une direction perpendiculaire à son axe de rotation.

Ainsi, dans l'exemple représenté aux figures, le rouleau 2018 de l'extrémité d'entrée 2061 du transporteur amont 202 est fixe de même que le rouleau 2019 de l'extrémité de sortie 2062 du transporteur aval 203.

En variante, il peut être envisagé que seul le rouleau 2018 de l'extrémité d'entrée 2061 du transporteur amont 202 soit fixe ou que seul le rouleau 2019 de l'extrémité de sortie 2062 du transporteur aval 203 soit fixe.

Les deux autres rouleaux, à savoir le rouleau 2019 de l'extrémité de sortie 2062 du chemin 206 du transporteur 202 amont et le rouleau 2018 de l'extrémité d'entrée 2061 du chemin 206 du transporteur 203 aval sont mobiles et sont, à cet effet, couplés à l'un des chariots, en l'occurrence le chariot 2020 supérieur qui est déplaçable le long d'un rail parallèle à au moins une partie du chemin 206. Ainsi, le brin 2016 supérieur a une longueur variable fonction de la position du front 207 de transition mobile.

Le chariot 2020 supérieur couple donc les rouleaux 2018 et 2019 qui forment l'extrémité libre de la branche supérieure du C formé par chaque transporteur.

De manière similaire, les rouleaux, représentés en 2022 et 2023 aux figures, et qui forment l'un, représenté en 2022, l'extrémité libre de la branche inférieure du C du transporteur amont 202, l'autre, représenté en 2023, l'extrémité libre de la branche inférieure du C du transporteur aval 203, sont couplés par le chariot 2021 inférieur qui se déplace le long d'un rail parallèle au rail du chariot 2020 supérieur.

Ces chariots supérieur 2020 et inférieur 2021 sont, pour leur déplacement, reliés par une chaîne sans fin 2024 représentée en pointillés aux figures. Cette chaîne sans fin 2024 peut être entraînée en déplacement dans un sens ou dans l'autre. Ainsi, cette chaîne sans fin 2024 assure un déplacement simultané, égal, et en sens opposé, des chariots supérieur 2020 et inférieur 2021.

Bien évidemment, tout système mécanique permettant d'assurer un déplacement simultané, égal, et en sens opposé, des chariots peut être utilisé en remplacement de cette chaîne 2024 sans fin.

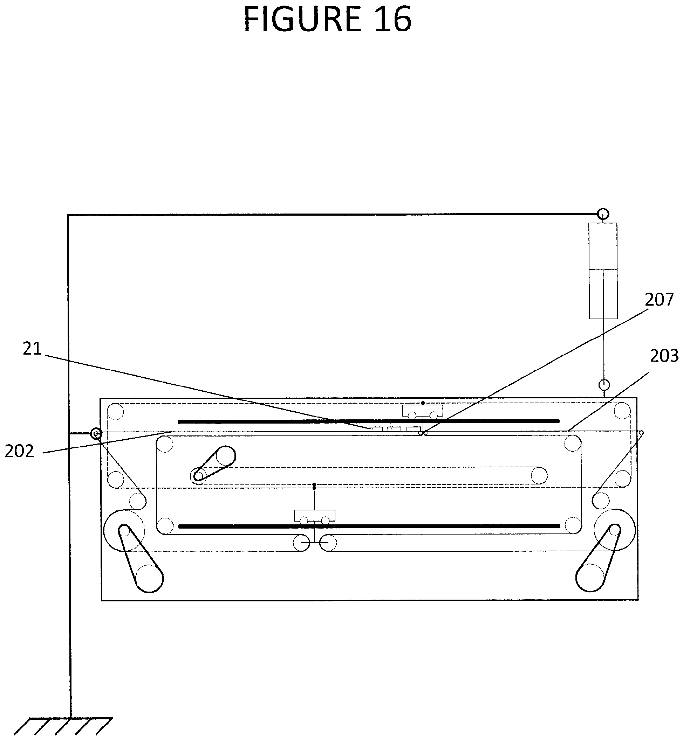

Le déplacement des chariots assure en parallèle un déplacement du front 207 de transition. Il suffit donc d'entraîner l'un des chariots dans un sens pour provoquer un déplacement égal et en sens opposé de l'autre chariot. Ce déplacement des chariots permet de faire varier la position du front 207 de transition et d'obtenir, par exemple, un dégroupage des produits comme illustré aux figures 16 à 18.

Il doit être noté que la chaîne 2024 sans fin peut être rendue motrice à l'aide d'un rouleau moteur autour duquel la chaîne 2024 s'enroule.

Dans l'exemple représenté, il est prévu d'entraîner l'un des chariots par un premier système d'entraînement moteur, tel qu'une courroie d'entraînement, ce chariot étant couplé par la chaîne 2024 sans fin non motrice au deuxième chariot.

Pour permettre le pilotage des chariots, le dispositif comprend une unité de pilotage qui est une unité électronique et/ou informatique comprenant au moins un microprocesseur et une mémoire de travail. Lorsque que l'expression "l'unité de pilotage est configurée pour" est utilisée, cela signifie que le microprocesseur comprend des instructions pour réaliser l'action.

Cette unité de pilotage est donc configurée pour piloter le déplacement du front 207 de transition, et éventuellement les vitesses des transporteurs amont et aval, en fonction du flux de produits souhaité pour alimenter la superposition de transporteurs 2 décrite ci-après.

Pour permettre un tel pilotage, l'unité de pilotage reçoit des informations. Le dispositif 1 de transfert comprend donc des moyens de détection des produits au moins sur le transporteur amont, des moyens de détection des produits sur la superposition de transporteurs 2 décrite ci-après et des moyens pour connaître la position des chariots et du front 207 de transition.

Les moyens pour connaître la position des chariots et du front de transition peuvent être formés par un encodeur équipant l'un des moteurs d'entraînement en déplacement dans la chaîne sans fin 2024.

Les moyens de détection de produits peuvent, quant à eux, comprendre des capteurs de présence tels qu'une caméra ou une cellule photoélectrique associée à un système laser ou autre.

L'installation 1 de régulation de flux de produits comprend encore des moyens d'entrée de données relatives à des consignes de positionnement des produits. Ces moyens d'entrée de données peuvent comprendre une interface homme/machine, une mémoire de données prédéfinies ou autre.

En sus du fait que le front 207 de transition est monté mobile, au moins la partie du chemin 206 du transporteur aval comprenant l'extrémité 2062 de sortie du chemin 206, c'est-à-dire au moins la partie du chemin 206 du transporteur aval qui s'étend depuis l'extrémité 2062 de sortie du chemin 206 en direction de l'extrémité 2061 d'entrée du chemin 206, et qui correspond au moins à la partie distale du chemin 206 du transporteur aval par rapport au front 207 de transition, est montée déplaçable à pivotement autour d'un axe 208 dit horizontal transversal à la direction D de déplacement des produits 21. Ce déplacement à pivotement d'au moins la partie distale du chemin 206 du transporteur 203 aval permet d'alimenter chacun des transporteurs 202 de la superposition de transporteurs 202 qui sera décrite ci-après.

Dans les figures 11 à 18, l'axe 208 dit horizontal transversal à la direction D de déplacement des produits 2021 forme l'axe pivot d'un bâti 209 sur lequel les transporteurs 202 et 203 sont disposés.

Ce bâti 209 est donc un bâti pivotant dans le sens d'une inclinaison vers le haut ou vers le bas autour de l'axe 208 horizontal transversal à la direction D de déplacement des produits 21. Cet axe 208 horizontal est disposé en amont du transporteur 202 amont. Le bâti 209 est, pour son montage à pivotement, couplé à un châssis 2011 d'une part, par une liaison pivot 2010 d'axe 208 pivot formé par l'axe horizontal transversal à la direction D de déplacement des produits, d'autre part, par au moins un organe 2012 d'entraînement en déplacement autour de l'axe 208 pivot de ladite liaison pivot 2010.

Dans l'exemple représenté, la liaison pivot 2010 est disposée au niveau de l'extrémité d'entrée 2061 du transporteur 202 amont et chaque organe 2012 d'entraînement en déplacement du bâti 209 autour de l'axe 208 formant l'axe pivot de la liaison pivot 2010 est un vérin disposé entre le châssis 2011 et le bâti 209 au niveau de l'extrémité de sortie 2062 du transporteur aval 203.

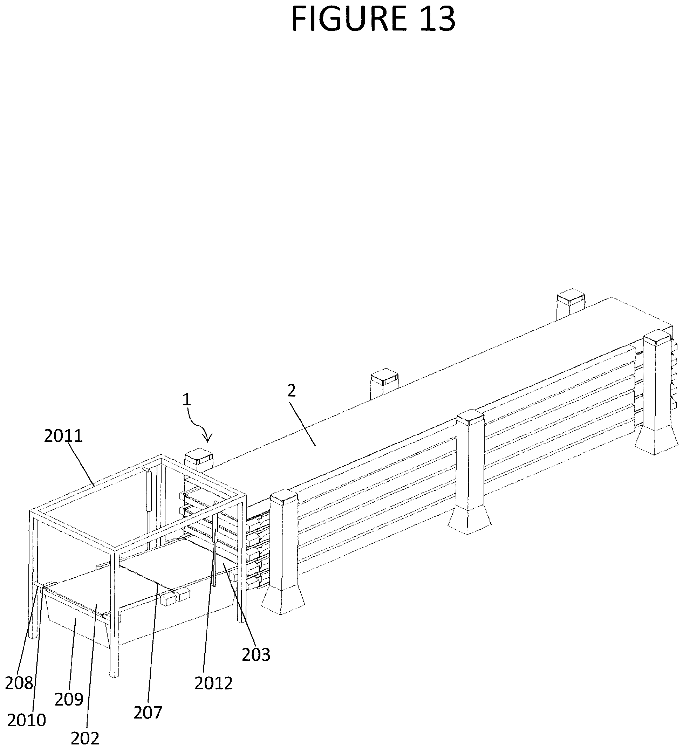

Dans l'exemple représenté à la figure 13, le châssis 2011 est formé par un cadre horizontal supporté par quatre montants. Le bâti est disposé sous le cadre et à l'aplomb du cadre, et est relié au cadre d'une part par deux vérins fonctionnant en synchronisme et formant les organes 2012 d'entraînement en déplacement à pivotement du bâti 209, d'autre part, par la liaison 2010 pivot.

La rentrée et la sortie des tiges des vérins 2012 entraînent un déplacement à pivotement du bâti 209 autour de sa liaison 2010 pivot. La commande des organes 2012 d'entraînement en déplacement peut s'opérer à l'aide de l'unité de pilotage qui est configurée pour commander le déplacement du front 207 de transition.

Des capteurs de position des organes 2012 d'entraînement en déplacement peuvent être prévus pour aider au pilotage.

On note que dans ce mode de réalisation, le rouleau 2018 disposé au niveau de l'extrémité 2061 d'entrée du chemin du transporteur amont et le rouleau 2019 disposé au niveau de l'extrémité 2062 de sortie du chemin du transporteur aval sont disposés fixes en écartement de l'axe 208 pivot.

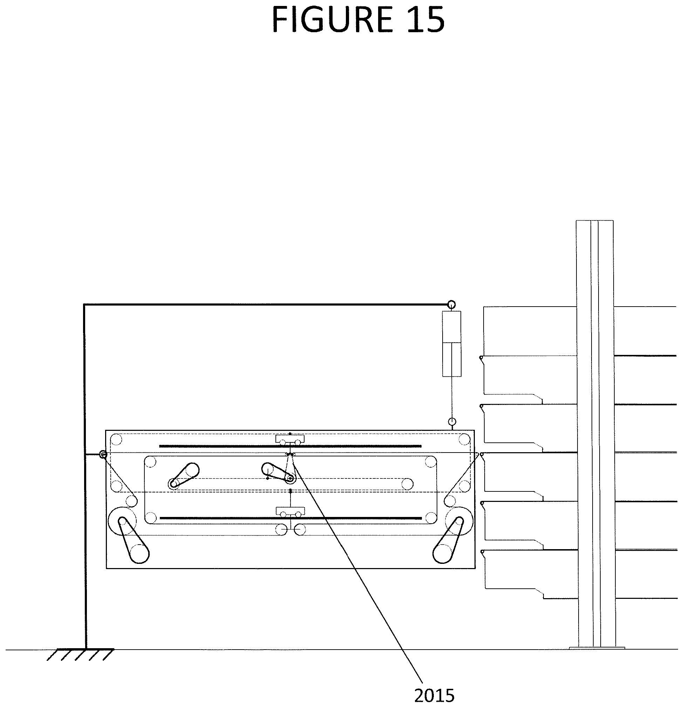

Pour parfaire l'ensemble, le dispositif peut comprendre au moins un transporteur 2015 supplémentaire disposé au niveau du front 207 de transition mobile. Ce transporteur 2015 supplémentaire, tel qu'illustré à la figure 15, est également un transporteur à bande dont la bande sans fin s'enroule autour de rouleaux dont au moins l'un est moteur. Ce transporteur 2015 est, via l'un des rouleaux autour desquels la bande s'enroule, couplé au chariot 2020 supérieur pour suivre le mouvement du front 207 de transition.

Le fonctionnement de ce poste 2020 d'alimentation, tel que décrit ci-dessus, s'opère comme suit :
Les consignes de positionnement des produits ont été pré-mémorisées. Les produits amenés sur le transporteur amont sont détectés. La position du front 207 de détection est connue. L'unité de pilotage commande, en fonction des produits détectés, de la position du front 207 de détection, et des consignes reçues, le déplacement des chariots en vue d'un déplacement du front 207 de transition et/ou un entraînement en déplacement à pivotement d'au moins une partie du chemin 206 du transporteur aval comprenant l'extrémité 2062 de sortie du chemin 206 du transporteur aval.

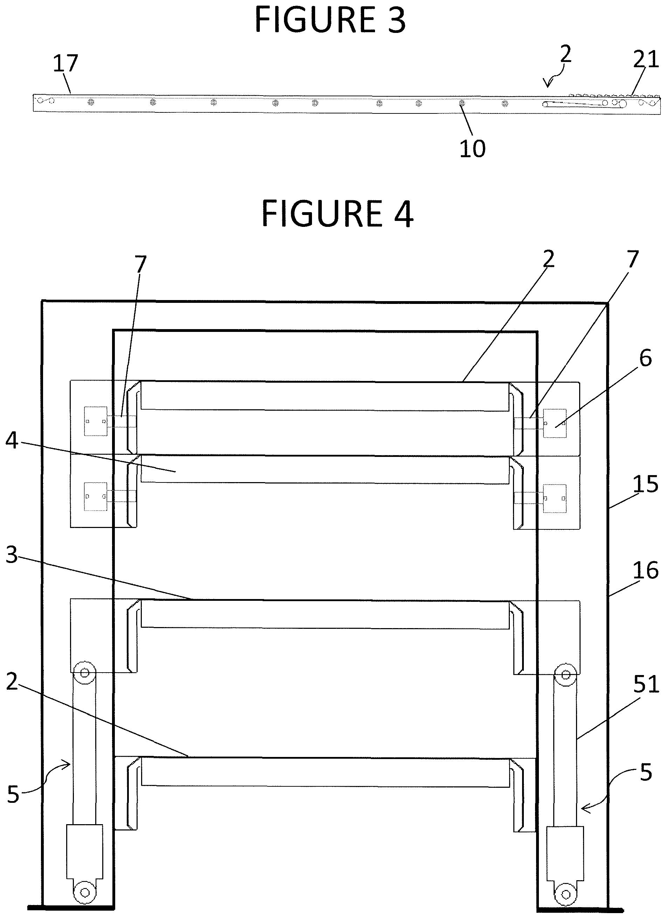

Chaque transporteur 2 de la superposition de transporteurs 2 disposée en aval du poste 20 d'alimentation peut être un transporteur à bandes, à rouleaux ou autre. Dans l'exemple représenté, les transporteurs 2 sont des transporteurs à bande avec une bande sans fin s'enroulant en boucle autour de rouleaux dont au moins un est motorisé, comme illustré à la figure 3.

Indépendamment de sa conception, chaque transporteur 2 délimite un chemin 17 d'entraînement en déplacement des produits 21, ce déplacement s'opérant généralement du poste 20 amont d'alimentation de produits 21 vers le poste aval de réception de produits. Chaque chemin 17 d'entraînement en déplacement de produits est, dans l'exemple représenté, apte à être alimenté en produits par le poste 20 d'alimentation en produits.

Tous ces transporteurs 2 sont disposés sur un châssis 15 de l'installation 1. Ce châssis 15 comprend, dans l'exemple représenté, au moins deux, en l'occurrence ici trois paires de montants 16. Les montants 16 d'une paire sont disposés en regard l'un de l'autre et sont séparés l'un de l'autre par les transporteurs 2. Les paires de montants 16 sont disposées de manière décalée axialement le long des chemins 17 d'entraînement en déplacement de produits des transporteurs 2.

Cette superposition de transporteurs 2 comprend encore un ou plusieurs, en l'occurrence ici plusieurs, transporteurs 2, appelés transporteurs intermédiaires. Ces transporteurs intermédiaires sont disposés entre le transporteur 2 le plus au-dessous de la superposition de transporteurs, appelé transporteur d'extrémité inférieure, et le transporteur 2 le plus au-dessus de la superposition de transporteurs, appelé transporteur d'extrémité supérieure.

De manière caractéristique à l'invention, au moins deux des transporteurs 2 de la superposition de transporteurs 2 sont montés sur le châssis 15 mobile en monte et baisse dans le sens d'un écartement ou d'un rapprochement de l'un des transporteurs 2 d'extrémité pour faire varier, dans le sens de la hauteur, l'écartement entre deux transporteurs.

A cet effet, l'installation 1 comprend un système 5 d'entraînement en déplacement en monte et baisse d'au moins l'un des transporteurs 2 mobiles. Chaque transporteur 2 mobile est, lorsqu'il est déplacé à l'aide du système 5 d'entraînement en déplacement en monte et baisse, appelé transporteur 3 maître.

Dans l'exemple représenté aux figures 4 à 7, un seul transporteur 3 maître est prévu. Ce transporteur 3 maître est ici formé par le transporteur intermédiaire disposé immédiatement au-dessus du transporteur d'extrémité inférieure. Le transporteur d'extrémité inférieure est donc un transporteur fixe en élévation.

En variante, le transporteur 3 maître aurait pu être formé par le transporteur d'extrémité inférieure.

Le système 5 d'entraînement en déplacement en monte et baisse du transporteur 3 maître peut affecter un grand nombre de formes. Il comprend généralement au moins un actionneur 51 hydraulique, et/ou électrique, et/ou pneumatique, et/ou mécanique. Généralement, ce système comprend une pluralité d'actionneurs 51.

Ces actionneurs 51 sont disposés, par exemple, au niveau de chacun des montants 16 du châssis 15 entre le châssis 15 et le transporteur 3 maître. Dans l'exemple représenté à la figure 4, chaque actionneur 51 est un vérin dont le corps est couplé au châssis et l'extrémité de la tige au transporteur 3 maître. Ainsi la rentrée et la sortie de la tige entraînent le déplacement en monte et baisse du transporteur 3 maître.

Une unité de pilotage permet, si nécessaire, de synchroniser le fonctionnement de tous les vérins. Ces vérins peuvent être des vérins électriques, hydrauliques, ou pneumatiques. En variante, il peut être utilisé un moteur en prise avec un système vis/écrou ou avec un système d'engrenage. La rotation de la vis par le moteur entraîne l'entraînement en monte et baisse du transporteur couplé à l'écrou déplaçable axialement le long de la vis.

Les transporteurs 2 mobiles, autres que le transporteur 3 maître, sont appelés transporteurs 4 esclaves. Ces transporteurs 4 esclaves sont disposés au-dessus du transporteur 3 maître et sont aptes à être entraînés en déplacement par le transporteur 3 maître.

Pour permettre le maintien des transporteurs 4 esclaves en position, l'installation 1 comprend des positions 6 d'indexation définies par des organes 7 de verrouillage. Ces organes 7 de verrouillage sont des organes activables/désactivables. Ces organes 7 de verrouillage actifs généralement par paires peuvent chacun retenir un transporteur 4 esclave dans la ou l'une des positions 6 d'indexation.

Dans l'exemple représenté aux figures 4 à 7, chaque position 6 d'indexation est définie par au moins une paire d'organes 7 de verrouillage, les organes 7 de verrouillage de la paire d'organes étant disposés en regard l'un de l'autre de part et d'autre de la superposition de transporteurs 2. Dans l'exemple représenté aux figures 4 à 7, chaque paire d'organes 7 de verrouillage est disposée sur une paire de montants en regard du châssis à raison d'un organe de verrouillage par montant. Il est prévu au moins autant de paires d'organes 7 de verrouillage que de transporteurs 4 esclaves.

Pour permettre un maintien efficace en position de chaque transporteur 2, il est prévu plusieurs paires d'organes 7 de verrouillage pour la définition d'une position 6 d'indexation.

Dans l'exemple représenté aux figures 4 à 7, chaque paire de montants 16 du châssis 15 est équipée d'une paire d'organes de verrouillage situés à un même niveau soit trois paires d'organes de verrouillage pour le soutien d'un transporteur 2. Ces organes 7 de verrouillage sont des organes activables/désactivables. Ces organes 7 de verrouillage affectent ici chacun la forme d'un crochet pivotant apte, en position activée, à faire saillie à l'intérieur de l'espace délimité par le châssis ménagé entre les montants 16 du châssis 15 et à s'escamoter au moins partiellement à l'intérieur des montants 16 réalisés sous forme d'un corps creux en position désactivée.

Chaque organe 7 de verrouillage est équipé d'un organe 8 d'entraînement en déplacement pour le déplacement entre une position active dans laquelle il fait saillie à l'intérieur de l'espace délimité par le châssis et ménagé entre les montants du châssis, et une position inactive dans laquelle il s'étend en retrait de l'espace ménagé entre les montants du châssis et, de préférence, au moins partiellement escamoté à l'intérieur du montant.

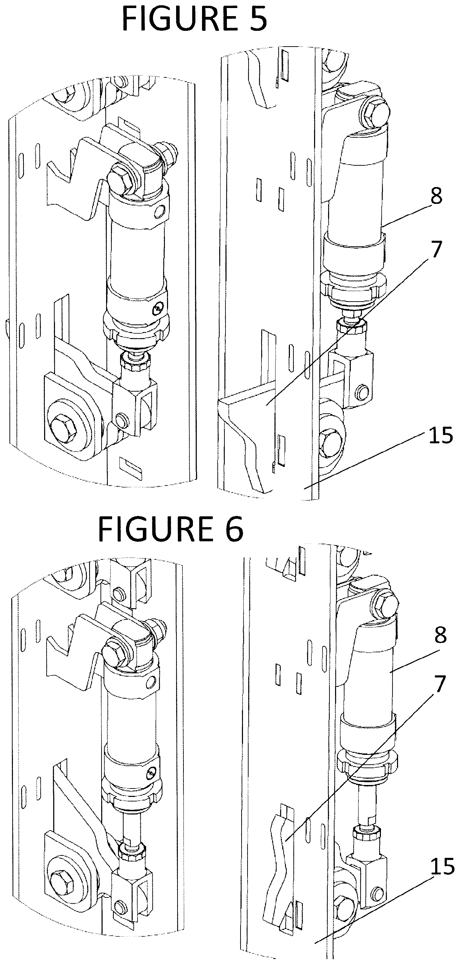

Cet organe 8 d'entraînement en déplacement de l'organe 7 de verrouillage peut être un actionneur hydraulique, pneumatique, électrique, mécanique. Dans l'exemple représenté aux figures 4 à 7, cet organe 8 d'entraînement en déplacement est un vérin disposé entre l'organe 7 de verrouillage et le châssis. Les figures 5 et 6 illustrent le déplacement des organes 7 de verrouillage entre une position verrouillée (figure 5) et une position déverrouillée (figure 6).

A nouveau, l'installation peut comprendre une unité de pilotage pour piloter le fonctionnement de l'ensemble des organes 8 d'entraînement en déplacement des organes 7 de verrouillage.

En position active en saillie à l'intérieur de l'espace entre montants du châssis, les organes 7 de verrouillage permettent le maintien d'un transporteur esclave qu'ils supportent. En position inactive dans laquelle ils s'escamotent à l'intérieur des montants, les organes 7 de verrouillage permettent un déplacement en monte et baisse du transporteur esclave le long des organes 7 de verrouillage.

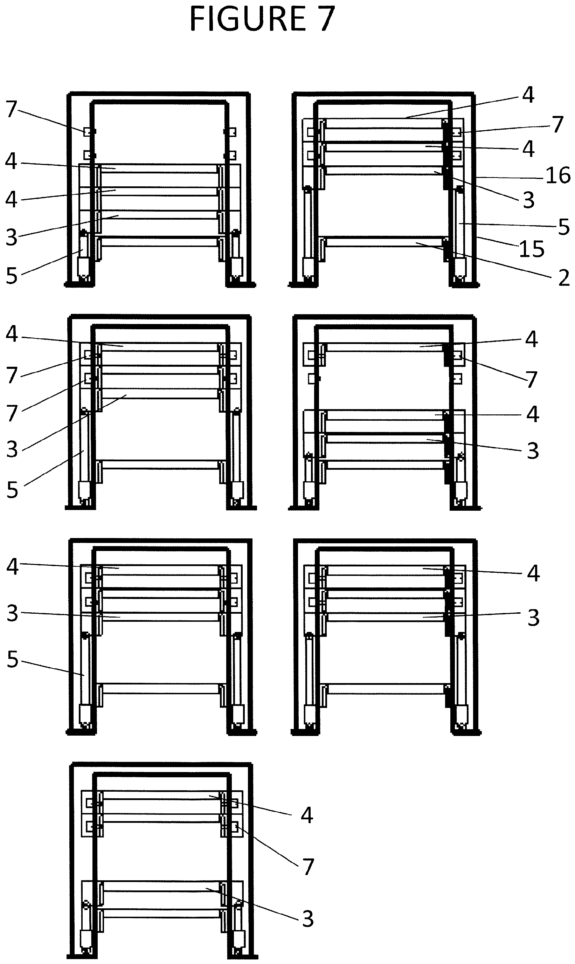

La présence de ces organes 7 de verrouillage permet d'obtenir une succession de positions des transporteurs du type de celles représentées à titre d'exemple à la figure 7.

Ainsi, dans la première ligne de schémas de la figure 7, dans le schéma en haut à gauche, tous les transporteurs, ici au nombre de quatre, sont en position basse. Cette configuration permet de nettoyer le transporteur d'extrémité supérieure.

Dans le schéma en haut à droite de cette première ligne, tous les transporteurs mobiles sont en position haute. Seul le transporteur fixe formé par le transporteur d'extrémité inférieure est en position basse. Cette position permet de nettoyer le transporteur d'extrémité inférieure.

L'élévation des transporteurs est obtenue par l'élévation du transporteur 3 maître disposé immédiatement au-dessus du transporteur d'extrémité inférieure à l'aide du système 5 d'entraînement en déplacement en monte et baisse dudit transporteur 3 maître. Ce transporteur 3 maître entraîne, lors de son élévation, tous les transporteurs 4 esclaves se trouvant au-dessus de lui jusqu'à un niveau d'élévation où sont positionnés des organes 7 de verrouillage définissant une position 6 d'indexation.

Dans l'exemple représenté, le châssis comporte en partie haute deux positions 6 d'indexation donc deux paires d'organes 7 de verrouillage par paire de montants. Les organes 7 de verrouillage de la position 6 d'indexation la plus haute sont amenés en position verrouillée pour retenir le transporteur esclave correspond au transporteur d'extrémité supérieure.

Dans la deuxième ligne de schémas de la figure 7, le transporteur maître est abaissé et le transporteur esclave intermédiaire disposé immédiatement au-dessus du transporteur maître suit le mouvement d'abaissement du transporteur maître tandis que le transporteur d'extrémité supérieure reste en position haute, maintenu dans cette position par les organes de verrouillage en position active. Cette configuration permet, par exemple, de nettoyer le transporteur esclave intermédiaire.

Dans la troisième ligne de schémas de la figure 7, le transporteur maître est à nouveau élevé entraînant avec lui le transporteur esclave immédiatement au-dessus jusqu'à la deuxième position d'indexation pour permettre, en position active des organes de verrouillage définissant cette position 6 d'indexation, la retenue du transporteur 4 esclave. Le transporteur 3 maître peut alors être abaissé pour permettre son nettoyage comme l'illustre le schéma de la quatrième ligne de schémas de la figure 7.

On constate que les différentes positions prises par les transporteurs, à la figure 7, permettent d'accéder à l'ensemble des transporteurs pour intervenir sur ces derniers sans avoir besoin d'une nacelle élévatrice. A chaque fois, le chemin du transporteur est à hauteur d'homme.

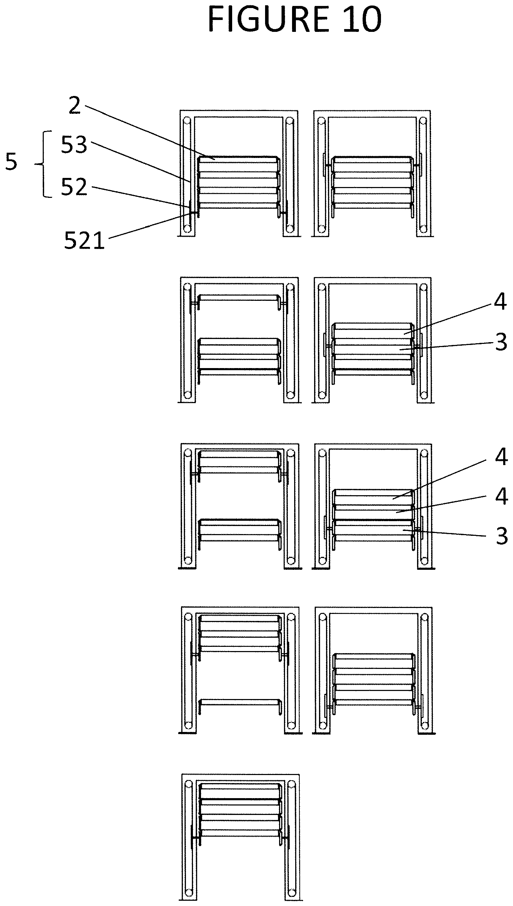

La figure 10 illustre un autre mode de réalisation de l'invention. Dans ce mode de réalisation, à nouveau l'installation 1 comprend un système 5 d'entraînement en déplacement en monte et baisse d'au moins l'un des transporteurs 2 mobiles dit transporteur 3 maître et chacun des autres transporteurs 2 mobiles positionné au-dessus du transporteur 3 maître est un transporteur 4 esclave apte à être entraîné en élévation par le transporteur 3 maître. Toutefois, dans ce mode de réalisation, certains des transporteurs 2 mobiles peuvent devenir tour à tour un transporteur 3 maître.

Dans ce mode de réalisation de la figure 10, le système 5 d'entraînement en déplacement en monte et baisse d'au moins l'un des transporteurs 2 mobiles, dit transporteur 3 maître, comprend au moins un système 52 d'accouplement à au moins l'un des transporteurs 2 mobiles.

Généralement, plusieurs systèmes 52 d'accouplement décalés axialement le long des transporteurs 2 sont prévus. Chaque système 52 d'accouplement est activable/désactivable. Le transporteur 3 maître est le transporteur 2 mobile auquel le ou chacun des systèmes 52 d'accouplement est couplé à l'état activé du système 52 d'accouplement.

En particulier, le ou chacun des systèmes 52 d'accouplement est formé d'au moins deux doigts 521 disposés de part et d'autre de la superposition de transporteurs 2. Chaque doigt 521 est porté par un mécanisme 53 d'entrainement en monte et baisse. Chaque doigt 521 est monté mobile entre deux positions pour permettre à l'état positionné des doigts 521 de part et d'autre d'un même transporteur 2 mobile, le passage des doigts 521 d'une position inactive correspondant à l'état inactif du système 52 d'accouplement à une position active de venue en prise avec ledit transporteur 2 mobile correspondant à l'état activé du système 52 d'accouplement.

Le transporteur d'extrémité supérieure et les transporteurs intermédiaires reposent sur le transporteur d'extrémité inférieure à l'état inactif du système 52 d'accouplement. Les rives longitudinales des transporteurs 2 sont surélevées de sorte qu'à l'état porté du transporteur d'extrémité supérieure et des transporteurs intermédiaires par le transporteur d'extrémité inférieure, le chemin 17 d'entraînement en déplacement des produits de chaque transporteur est surmonté d'un espace libre le séparant du chemin 17 d'entraînement en déplacement des produits du transporteur immédiatement au-dessus pour permettre le transport de produits.

En pratique, l'installation 1 comprend donc généralement plusieurs systèmes 52 d'accouplement décalés axialement le long des transporteurs 2 mobiles. Chaque système 52 d'accouplement peut être disposé au niveau d'une paire de montants 16 en regard du châssis 15. Chaque doigt 521 d'un système 52 d'accouplement est monté sur son mécanisme 53 d'entraînement en monte et baisse mobile suivant une direction transversale, de préférence perpendiculaire à la direction de déplacement en monte et baisse. Ainsi, chaque doigt 521 est monté mobile entre une position active en saillie à l'intérieur de l'espace délimité entre les montants 16 du châssis et une position inactive dans laquelle il s'étend en retrait ou en affleurement desdits montants. En position active, chaque doigt 521 vient se loger dans un évidement en regard du transporteur 2 mobile qui forme alors le transporteur 3 maître susceptible d'entraîner en déplacement tous les transporteurs 4 esclaves qui se trouvent au-dessus de lui. Le mécanisme 53 d'entraînement en monte et baisse d'un doigt est ici formé par une chaîne sans fin s'enroulant autour de deux poulies à axes horizontaux. Ainsi, chaque doigt est couplé à un mécanisme 53 d'entraînement en monte et baisse. Les mécanismes d'entraînement en monte et baisse fonctionnent en synchronisme.

A cet effet, une unité de pilotage qui commande le fonctionnement du système 5 d'entraînement peut être prévu. Cette unité de pilotage synchronise également les déplacements des doigts en sus de leur déplacement en monte et baisse. Ainsi, dans l'exemple représenté à la figure 10, les transporteurs mobiles sont dans la première ligne de schémas sur le schéma de gauche représentés tous en position basse. Cette position basse correspond à la configuration dite de travail de l'installation 1 de régulation de flux dans laquelle les transporteurs 2 mobiles sont utilisés pour transporter des produits. Cette position basse correspond également à la configuration dans laquelle le transporteur d'extrémité supérieure peut être nettoyé.

Le système 5 d'entraînement est activé et les doigts sont couplés au transporteur d'extrémité supérieure pour l'écarter du transporteur intermédiaire immédiatement au-dessous afin de permettre le nettoyage du transporteur intermédiaire comme illustré dans le schéma de gauche de la deuxième ligne de schéma de la figure 10.

Le système 5 d'entraînement est ensuite couplé à ce transporteur intermédiaire immédiatement situé au-dessous du transporteur d'extrémité supérieure. Ce transporteur intermédiaire devient un transporteur 3 maître capable d'entraîner, au cours de son déplacement, le transporteur d'extrémité supérieure pour permettre le nettoyage du transporteur immédiatement au-dessous de ce transporteur intermédiaire maître, comme l'illustre le schéma de gauche de la troisième ligne de schémas.

Le couplage successif du système 5 d'entraînement à chaque transporteur intermédiaire puis au transporteur d'extrémité inférieure est poursuivi pour permettre le nettoyage de tous les transporteurs intermédiaires, du transporteur d'extrémité inférieur et de l'espace situé au-dessous du transporteur d'extrémité inférieure.

Il est ainsi possible, à l'aide d'un système 5 d'entraînement de conception simple, de nettoyer l'ensemble des transporteurs 2 de l'installation. A chaque fois, le système 5 d'entraînement à l'état couplé à un transporteur entraîne ledit transporteur et les transporteurs situés au-dessus de ce transporteur maître en déplacement en montée pour permettre le nettoyage du transporteur situé immédiatement en-dessous avant de ramener lesdits transporteurs en appui sur le transporteur venant d'être nettoyé à écartement de ce dernier pour permettre, en configuration de travail, le transport de produits à l'aide de chacun de ces transporteurs. La superposition de transporteurs 2 est donc, au moins à l'état inactif du système d'accouplement, formée de transporteurs 2 supportés chacun par le transporteur immédiatement en-dessous à l'exception du transporteur d'extrémité inférieure.

Pour parfaire une telle installation, cette dernière comprend un système 9 de chauffage et/ou de refroidissement d'au moins l'un, de préférence de chacun, des transporteurs 2 comme dans l'exemple représenté.

Ce système 9 de chauffage et/ou de refroidissement est un système de chauffage et/ou de refroidissement par air et comprend pour chaque transporteur au moins une gaine 10 perméable à l'air positionnée au-dessus du chemin 17 d'entraînement en déplacement des produits 21 du transporteur 2. Ces gaines 10 s'étendent transversalement à l'axe longitudinal du chemin de manière décalée axialement le long du chemin pour permettre une répartition du flux le long du chemin 17. Dans l'exemple de la figure 3, les gaines 10 représentées correspondent aux gaines aptes à assurer un refroidissement et/ou un chauffage du transporteur non représenté situé au-dessous du transporteur 2 représenté.

Ce système 9 de chauffage et/ou de refroidissement comprend encore un distributeur 11 d'air commun à l'ensemble des gaines. Ce distributeur 11 d'air affecte ici la forme d'une colonne disposée parallèlement à l'un des montants 16 du châssis 15.

Ce système 9 de refroidissement et/ou de chauffage comprend encore pour chaque transporteur au moins une conduite 12 souple de liaison de la ou des gaines 10 de transport au distributeur 11 d'air. La souplesse de la conduite 12 de liaison autorise un déplacement en monte et baisse du transporteur si nécessaire.

Dans les exemples représentés, pour chaque transporteur 2, une goulotte 18 est interposée entre la ou les gaines 10 d'un transporteur et la conduite 12 souple, cette goulotte 18 s'étendant le long de l'axe longitudinal du chemin 17 d'entraînement en déplacement des produits 21 du transporteur 2. Ainsi, la conduite 12 souple débouche dans cette goulotte 18 qui elle-même alimente les gaines du transporteur.

Pour permettre l'alimentation en air du distributeur 11 d'air sous pression, il est prévu un générateur 13 d'air sous pression et des organes 14 de traitement thermique dudit air. Le générateur 13 d'air sous pression est raccordable au distributeur 11 d'air sous pression. Ce générateur 13 d'air sous pression est disposé au-dessus des transporteurs 2.

Ce générateur 13 d'air sous pression peut être constitué par un ventilateur.

Les organes 14 de traitement thermique de l'air peuvent affecter un grand nombre de formes et peuvent être formés par de simples résistances électriques ou un échangeur de chaleur disposé sur le trajet suivi par le flux d'air généré par le générateur d'air ou par une pompe à chaleur.

En fonctionnement, les transporteurs de l'installation 1 de régulation de flux sont en position basse comme représenté par exemple au premier schéma de la première ligne de schémas de la figure 7.

Ces transporteurs sont maintenus dans cette position tant que l'installation est utilisée pour transférer des produits depuis le poste d'alimentation en produits vers la superposition de transporteurs.

Lorsque l'installation est arrêtée pour permettre la maintenance ou le nettoyage des transporteurs ou tout autre intervention sur les transporteurs, les transporteurs mobiles peuvent alors être entraînés en déplacement pour permettre de les écarter les uns des autres et autoriser l'accès au chemin de transport de l'un quelconque des transporteurs.

## Revendications

1. Installation (1) de régulation de flux de produits (21) comprenant une superposition d'au moins trois transporteurs (2) et un poste (20) d'alimentation en produits (21) précédant ladite superposition de transporteurs (2), chaque transporteur (2) délimitant un chemin (17) d'entraînement en déplacement de produits (21), le chemin (17) d'au moins l'un, de préférence de chacun, des transporteurs (2) étant apte à être alimenté en produits (21) à partir du poste (20) d'alimentation en produits, lesdits transporteurs (2) étant disposés sur un châssis (15), le ou les transporteurs (2) disposés entre le transporteur (2) d'extrémité inférieure, à savoir le transporteur (2) le plus au-dessous de la superposition de transporteurs (2), et le transporteur (2) d'extrémité supérieure, à savoir le transporteur (2) le plus au-dessus de la superposition de transporteurs (2), étant appelés transporteurs (2) intermédiaires, au moins deux des transporteurs (2) de la superposition de transporteurs (2) étant montés sur le châssis (15) mobiles en monte et baisse dans le sens d'un écartement ou d'un rapprochement de l'un des transporteurs (2) d'extrémité, **caractérisée en ce que** l'installation (1) comprend un système (5) d'entraînement en déplacement en monte et baisse d'au moins l'un des transporteurs (2) mobiles dit transporteur (3) maître, **en ce que** chacun des autres transporteurs (2) mobiles positionné au-dessus du transporteur (3) maître est un transporteur (4) esclave apte à être entraîné en élévation par le transporteur (3) maître, **en ce que** le système (5) d'entraînement en déplacement en monte et baisse d'au moins l'un des transporteurs (2) mobiles, dit transporteur (3) maître, comprend au moins un système (52) d'accouplement à au moins l'un des transporteurs (2) mobiles, le ou chaque système (52) d'accouplement étant activable/désactivable, le transporteur (3) maître étant le transporteur (2) mobile auquel le ou chacun des systèmes (52) d'accouplement est couplé à l'état activé du système (52) d'accouplement et **en ce que** le ou au moins l'un des systèmes (52) d'accouplement est formé d'au moins deux doigts (521) disposés de part et d'autre de la superposition de transporteurs (2), chaque doigt (521) étant porté par un mécanisme (53) d'entrainement en monte et baisse, chaque doigt (521) étant monté mobile entre deux positions pour permettre à l'état positionné des doigts (521) de part et d'autre d'un même transporteur (2) mobile, le passage des doigts (521) d'un position inactive correspondant à l'état inactif du système (52) d'accouplement à une position active de venue en prise avec ledit transporteur (2) mobile correspondant à l'état activé du système (52) d'accouplement.

2. Installation (1) de régulation de flux de produits selon la revendication 1, **caractérisée en ce que** le ou au moins l'un des transporteurs (3) maîtres est formé par le transporteur intermédiaire disposé immédiatement au-dessus du transporteur d'extrémité inférieure.

3. Installation (1) de régulation de flux de produits selon l'une des revendications 1 ou 2, **caractérisée en ce que** le poste (20) d'alimentation en produits (21) précédant ladite superposition de transporteurs (2) comprend au moins deux transporteurs dits respectivement amont (202) et aval (203) disposés en ligne, chaque transporteur (202, 203) comprenant au moins une bande (204) transporteuse sans fin et un organe (5) moteur d'entraînement en déplacement de ladite bande (204), cette bande (204) délimitant au niveau de sa surface dite active apte à porter des produits (21) un chemin (206) d'entraînement en déplacement des produits (21) suivant une direction (D) de déplacement des produits (21) avec l'une (2061) des extrémités du chemin (206) formant l'entrée (2061) d'alimentation en produits (2021) du chemin (206) et l'extrémité (2062) opposée formant la sortie (2062) d'évacuation des produits (21), lesdits chemins (206) de chaque bande (204) s'étendant dans le prolongement l'un de l'autre, l'extrémité (2062) de sortie du chemin (206) du transporteur amont (202) délimitant avec l'extrémité (2061) d'entrée du chemin (206) du transporteur aval (203) un front (207) de transition, le front (207) de transition étant monté mobile dans le sens d'un rapprochement ou d'un écartement de l'extrémité (2061) d'entrée du chemin (206) du transporteur aval (203), et au moins une partie du chemin (206) du transporteur aval (203) comprenant l'extrémité (2062) de sortie dudit chemin (206) étant montée déplaçable à pivotement autour d'un axe (208), dit horizontal transversal à la direction (D) de déplacement des produits (2021), cet axe (208) horizontal formant l'axe pivot d'un bâti (209) pivotant sur lequel les transporteurs (202, 203) sont disposés.

4. Installation (1) de régulation de flux de produits selon la revendication 3, **caractérisée en ce que** le bâti (209) pivotant est, pour son montage à pivotement, couplé à un châssis (2011) d'une part, par une liaison pivot (2010), d'autre part, par au moins un organe (2012) d'entraînement en déplacement autour de l'axe (208) de ladite liaison pivot (2010).

5. Installation (1) de régulation de flux de produits selon l'une des revendications 1 à 4, **caractérisée en ce qu'**elle comprend un système (9) de chauffage et/ou de refroidissement d'au moins l'un des transporteurs (2).

6. Installation (1) de régulation de flux de produits selon la revendication 5, **caractérisée en ce que** le système (9) de chauffage et/ou de refroidissement est un système (9) de chauffage et/ou de refroidissement par air.

7. Installation (1) de régulation de flux de produits selon l'une des revendications 5 ou 6, **caractérisée en ce que** le système (9) de chauffage et/ou de refroidissement comprend au moins une gaine (10) perméable à l'air positionnée au-dessus du chemin (17) d'entraînement en déplacement de produits (21) du transporteur (2), un distributeur (11) d'air sous pression et une conduite (12) souple de liaison de la gaine (10) au distributeur (11) d'air.

8. Installation (1) de régulation de flux de produits selon la revendication 7, **caractérisée en ce que** le système (9) de chauffage et/ou de refroidissement comprend en outre un générateur (13) d'air sous pression et des organes (14) de traitement thermique dudit air, le générateur (13) d'air sous pression étant raccordable au distributeur (11) d'air sous pression, ce générateur (13) d'air sous pression étant disposé au-dessus des transporteurs (2).

9. Installation (1) de régulation de flux de produits selon l'une des revendications 7 ou 8, **caractérisée en ce que** le châssis (15) comprend au moins deux paires de montants (16), **en ce que** les montants (16) d'une paire de montants (16) sont disposés en regard l'un de l'autre et séparés l'un de l'autre par la superposition de transporteurs (2), et **en ce que** le distributeur (11) d'air affecte de préférence la forme d'une colonne disposée parallèlement à l'un des montants (16) du châssis (15).

## Patentansprüche

1. Anlage (1) zur Produktflussregulierung (21), umfassend eine Überlagerung von mindestens drei Fördervorrichtungen (2) und eine Station (20) zur Versorgung mit Produkten (21), die der Überlagerung von Fördervorrichtungen (2) vorangestellt ist, wobei jede Fördervorrichtung (2) eine Bahn (17) zur Verschiebung von Produkten (21) begrenzt, wobei die Bahn (17) mindestens einer, vorzugsweise jeder der Fördervorrichtungen (2) ausgelegt ist, um mit Produkten (21) von der Station (20) zur Versorgung mit Produkten versorgt zu werden, wobei die Fördervorrichtungen (2) auf einem Rahmen (15) angeordnet sind, wobei der oder die Fördervorrichtungen (2), die zwischen der unteren Endördervorrichtung (2), d. h. der untersten Fördervorrichtung (2) der Überlagerung von Fördervorrichtungen (2) und der oberen Endfördervorrichtung (2), d. h. der obersten Fördervorrichtung (2) der Überlagerung von Fördervorrichtungen (2) angeordnet ist, als mittlere Fördervorrichtungen (2) bezeichnet werden, wobei mindestens zwei der Fördervorrichtungen (2) der Überlagerung von Fördervorrichtungen (2) auf dem Rahmen (15) beweglich nach oben und unten in Richtung einer Beabstandung oder einer Annäherungeiner der Endfördervorrichtungen (2) montiert sind, **dadurch gekennzeichnet, dass** die Anlage (1) ein System (5) zur Verschiebung nach oben und unten mindestens eines der beweglichen Fördervorrichtungen (2), bezeichnet als Hauptfördervorrichtung (3) umfasst, dadurch, dass jede der anderen beweglichen Fördervorrichtungen (2), die über der Hauptfördervorrichtung (3) positioniert ist, eine Nebenfördervorrichtung (4) ist, die ausgelegt ist, um von der Hauptfördervorrichtung (3) angehoben zu werden, dadurch, dass das System (5) zur Verschiebung nach oben und unten mindestens eines der beweglichen Fördervorrichtungen (2), bezeichnet als Hauptfördervorrichtung (3), mindestens ein System (52) zur Kopplung an mindestens eines der beweglichen Fördervorrichtungen (2) umfasst, wobei das oder jedes System (52) zur Kopplung aktivierbar/deaktivierbar ist, wobei die Hauptfördervorrichtung (3) die bewegliche Fördervorrichtung (2) ist, an die das oder jedes der Systeme (52) zur Kopplung im aktiven Zustand des Systems (52) zur Koppung gekoppelt ist, und dadurch, dass das mindestens eine der Systeme (52) zur Kopplung aus mindestens zwei Stiften (521) gebildet ist, die auf beiden Seiten der Überlagerung von Fördervorrichtungen (2) angeordnet sind, wobei jeder Stift (521) durch einen Mechanismus (53) zum Antrieb nach oben und unten getragen wird, wobei jeder Stift (521) beweglich zwischen zwei Positionen montiert ist, um im Zustand, in dem die Stifte (521) auf beiden Seiten einer gleichen beweglichen Fördervorrichtung (2) positioniert sind, den Übergang der Stifte (521) aus einer inaktiven Position, die dem inaktiven Zustand des Systems (52) zur Kopplung entspricht, in einen aktiven Zustand des Eingreifens mit der beweglichen Fördervorrichtung (2) zu ermöglichen, die dem aktivierten Zustand des Systems (52) zur Kopplung entspricht.

2. Anlage (1) zur Produktflussregulierung nach Anspruch 1, **dadurch gekennzeichnet, dass** die oder mindestens eine der beweglichen Fördervorrichtungen (3) von der Zwischenfördervorrichtung gebildet ist,die unmittelbar über der unteren Endfördervorrichtung angeordnet ist.

3. Anlage (1) zur Produktflussregulierung nach einem der Ansprüch 1 oder 2, **dadurch gekennzeichnet, dass** die Station (20) zur Versorgung mit Produkten (21), die der Überlagerung von Fördervorrichtungen (2) vorangestellt ist, mindestens zwei Fördervorrichtungen, bezeichnet jeweils als vorgelagert (202) und nachgelagert (203), angeordnet in Reihe, umfasst, wobei jede Fördervorrichtung (202, 203) mindestens ein Endlosförderband (204) und ein Motororgan (5) zur Verschiegung des Bands (204) umfasst, wobei dieses Band (204) auf der Ebene seiner Oberfläche, bezeichnet als aktiv, die ausgelegt ist, um Produkte (21) zu tragen, eine Bahn (206) zur Verschiebung der Produkte (21) gemäss einer Richtung (D) zur Verschiebung der Produkte (21) begrenzt, wobei eines (2061) der Enden der Bahn (206) den Eingang (2061) zur Versorgung mit Produkten (2021) der Bahn (206) bildet, und wobei das gegenüberliegende Ende (2062) den Ausgang (2062) zum Abtransport der Produkte (21) bildet, wobei sich die Bahnen (206) jedes Bands (204) in der Verlängerung voneinander erstrecken, wobei das Ausgangsende (2062) der Bahn (206) der vorgelagerten Fördervorrichtung (202) mit dem Eingangsende (2061) der Bahn (206) der nachgelagerten Fördervorrichtung (203) eine Übergangsfront (207) bildet, wobei die Übergangsfront (207) beweglich in der Richtung einer Annäherung und einer Beabstandung des Eingangsendes (2061) der Bahn (206) der nachgelagerten Fördervorrichtung (203) montiert ist, und wobei mindestens ein Teil der Bahn (206) der nachgelagerten Fördervorrichtung (203), die das Ausgangsende (2062) der Bahn (206) umfasst, schwenkbar um eine Achse (208), bezeichnet als horizontal quer zur Vershciegungsrichtung (D) der Produkte (2021), montiert ist, wobei diese horizontale Achse (208) die Schwenkachse eines Gestells (209) bildet, auf dem die Fördervorrichtungen (202, 203) angeordnet sind.

4. Anlage (1) zur Produktflussregulierung nach Anspruch 3, **dadurch gekennzeichnet, dass** das schwenkende Gestell (209) für seine schwenkende Montage an einen Rahmen (2011) einerseits durch eine Schwenkverbindung (2010), andererseits durch mindestens ein Organ (2012) zur Verschiebung um die Achse (208) der Schwenkverbindung (2010) gekoppelt ist.

5. Anlage (1) zur Produktflussregulierung nach einem der Ansprüche 1 bis 4, **dadurch gekennzeichnet, dass** sie ein System (9) zur Erhitzung und/oder Abkühlung mindestens einer der Fördervorrichtungen (2) umfasst.

6. Anlage (1) zur Produktflussregulierung nach Anspruch 5, **dadurch gekennzeichnet, dass** das System (9) zur Erhitzung und/oder Abkühlung ein System (9) zur ERhitzung und/oder Abkühlung durch Luft ist.

7. Anlage (1) zur Produktflussregulierung nach einem der Ansprüche 5 oder 6, **dadurch gekennzeichnet, dass** das System (9) zur Erhitzung und/oder Abkühlung mindestens eine luftdurchlässige Hülle (10), die über der Bahn (17) zur Verschiebung der Produkte (21) der Fördervorrichtung (2) positioniert ist, einen Verteiler (11) von Druckluft und eine flexiblenLeitung (12) der Verbindung der Hülle (10) mit dem Verteiler (11) von Luft umfasst.

8. Anlage (1) zur Produktflussregulierung nach Anspruch 7, **dadurch gekennzeichnet, dass** das System (9) zur Erhitzung und/oder Abkühlung ausserdem einen Druckluftgenerator (13) und Organe (14) zur thermischen Behandlung der Luft umfasst, wobei der Druckluftgenerator (13) mit dem Druckluftverteiler (11) verbunden werden kann, wobei dieser Druckluftgenerator (13) über den Fördervorrichtungen (2) angeordnet ist.

9. Anlage (1) zur Produktflussregulierung nach einem der Ansprüche 7 oder 8, **dadurch gekennzeichnet, dass** der Rahmen (15) mindestens zwei Paare von Pfosten (16) umfasst, dadurch, dass die Pfosten (16) eines Paars von Pfosten (16) einander gegenüberliegend angeordnet und voneinander durch die Überlagerung von Fördervorrichtungen (2) getrennt sind, und dadurch, dass der Luftverteiler (11) vorzugsweise die Form einer Säule annimmt, die parallel zu einem der Pfosten (16) des Rahmens (15) angeordnet ist.

## Claims

1. An installation (1) for product flow regulation (21) comprising a stack of at least three conveyors (2) and a product (21) supply station (20) preceding said stack of conveyors (2), each conveyor (2) delimiting a path (17) for driving the movement of products (21), the path (17) of at least one, preferably each, of the conveyors (2) being able to be supplied with products (21) from the product supply station (20), said conveyors (2) being arranged on a base frame (15), the conveyor(s) (2) arranged between the lower end conveyor (2), namely the bottommost conveyor (2) of the stack of conveyors (2), and the upper end conveyor (2), namely the topmost conveyor (2) of the stack of conveyors (2), being called intermediate conveyors (2), at least two of the conveyors (2) of the stack of conveyors (2) being mounted on the base frame (15) such that they can move upwards and downwards to move apart from or closer to one of the end conveyors (2), **characterized in that** the installation (1) comprises a system (5) for driving the upward and downward movement of at least one of the movable conveyors (2), called primary conveyor (3), **in that** each of the other movable conveyors (2) positioned above the primary conveyor (3) is a secondary conveyor (4) able to be driven in elevation by the primary conveyor (3), **in that** the system (5) for driving the upward and downward movement of at least one of the movable conveyors (2), called primary conveyor (3), comprises at least one coupling system (52) for coupling to at least one of the movable conveyors (2), the or each coupling system (52) being able to be activated/deactivated, the primary conveyor (3) being the movable conveyor (2) to which the or each of the coupling systems (52) is coupled in the activated state of the coupling system (52) and **in that** the or at least one of the coupling systems (52) is formed by at least two fingers (521) arranged on either side of the stack of conveyors (2), each finger (521) being borne by a mechanism (53) for driving the raising and lowering, each finger (521) being mounted such that it can move between two positions to allow, in the state of the fingers (521) positioned on either side of a same movable conveyor (2), the fingers (521) to switch from an inactive position corresponding to the inactive state of the coupling system (52) to an active position engaged with said movable conveyor (2) corresponding to the activated state of the coupling system (52).

2. The installation (1) for product flow regulation according to claim 1, **characterized in that** the or at least one of the primary conveyors (3) is formed by the intermediate conveyor arranged immediately above the lower end conveyor.

3. The installation (1) for product flow regulation according to one of claims 1 or 2, **characterized in that** the product (21) supply station (20) preceding said stack of conveyors (2) comprises at least two conveyors respectively referred to as upstream (202) and downstream (203) arranged in a line, each conveyor (202, 203) comprising at least one endless conveyor belt (204) and a motor member (5) for driving the movement of said belt (204), this belt (204) delimiting, at its so-called active surface able to bear products (21), a path (206) for driving the movement of the products (21) in a direction (D) of movement of the products (21) with one (2061) of the ends of the path (206) forming the product (2021) supply inlet (2061) of the path (206) and the opposite end (2062) forming the product (21) discharge outlet (2062), said paths (206) of each belt (204) extending in the extension of one another, the outlet end (2062) of the path (206) of the upstream conveyor (202) delimiting a transition edge (207) with the inlet end (2061) of the path (206) of the downstream conveyor (203), the transition edge (207) being mounted movably in the direction so as to come closer to or further from the inlet end (2061) of the path (206) of the downstream conveyor (203), and at least part of the path (206) of the downstream conveyor (203) comprising the outlet end (2062) of said path (206) being mounted so as to be pivotable about an axis (208), said to be horizontal transverse to the direction (D) of movement of the products (2021), this horizontal axis (208) forming the pivot axis of a pivoting frame (209) on which the conveyors (202, 203) are arranged.

4. The installation (1) for product flow regulation according to claim 3, **characterized in that** the pivoting frame (209) is, for pivoting mounting thereof, coupled to a base frame (2011) on the one hand, by a pivot link (2010), on the other hand, by at least one member (2012) for driving the movement about the axis (208) of said pivot link (2010).

5. The installation (1) for product flow regulation according to one of claims 1 to 4, **characterized in that** it comprises a system (9) for heating and/or cooling at least one of the conveyors (2).

6. The installation (1) for product flow regulation according to claim 5, **characterized in that** the heating and/or cooling system (9) is an air heating and/or cooling system (9).

7. The installation (1) for product flow regulation according to one of claims 5 or 6, **characterized in that** the heating and/or cooling system (9) comprises at least one air-permeable sheath (10) positioned above the path (17) for driving the movement of products (21) of the conveyor (2), a pressurized air valve (11) and a flexible duct (12) for connecting the sheath (10) to the air valve (11).

8. The installation (1) for product flow regulation according to claim 7, **characterized in that** the heating and/or cooling system (9) further comprises a pressurized air generator (13) and members (14) for thermal treatment of said air, the pressurized air generator (13) being able to be connected to the pressurized air valve (11), this pressurized air generator (13) being arranged above the conveyors (2).

9. The installation (1) for product flow regulation according to one of claims 7 or 8, **characterized in that** the base frame (15) comprises at least two pairs of uprights (16), **in that** the uprights (16) of a pair of uprights (16) are arranged facing one another and separated from one another by the stack of conveyors (2), and **in that** the air valve (11) preferably assumes the form of a column arranged parallel to one of the uprights (16) of the base frame (15).
